# EUROPEAN PATENT APPLICATION

(11) **EP 2 535 861 A1**
(43) Date of publication of application: **19.12.2012**
(21) Application number: 10845781.3
(22) Date of filing: 13.08.2010
(51) Int. Cl.: G06T 1/00, B60R 1/00, G06T 1/20, G08G 1/16

(54) **VEHICLE-MOUNTED IMAGE PROCESSING APPARATUS**

(30) Priority: 10.02.2010 JP 2010027747
(71) Applicant: Hitachi Automotive Systems, Ltd., Hitachinaka-shi Ibaraki 312-8502 (JP)
(72) Inventor: NAYA, Hidemitsu, Hitachi-shi Ibaraki 319-1292 (JP); MONJI, Tatsuhiko, Hitachinaka-shi Ibaraki 312-8503 (JP); ISHIGAKI Kazuma, Hitachinaka-shi Ibaraki 312-8503 (JP)
(74) Representative: MERH-IP Matias Erny Reichl Hoffmann
(86) International application number: PCT/JP2010/063757
(87) International publication number: WO 2011/099189

(57) **Abstract**

There is provided a vehicle-mounted image processing device that is capable of making a plurality of processing units appropriately perform processes corresponding to scenes in which there are many types, such as people, vehicles, etc., and in which they are combined. Based on processing results of image processing by a plurality of processing units 40, the vehicle-mounted image processing device generates tag information representing the type and priority of image processing to be executed next by each of the processing units 40, and, using tag information generated during previous image processing, determines whether or not to have each of the processing units 40 perform image processing.

## Description

### TECHNICAL FIELD

The present invention relates to an image processing device mounted on a vehicle.

### BACKGROUND ART

Vehicle-mounted image processing devices recognize an object from an image captured by an image sensor, and, based on that recognition result, control the vehicle body and issue various warnings to realize an active safety function.

However, it is not just observation objects of interest for the active safety of the vehicle, e.g., people, vehicles, etc., that are found in images captured by an image sensor. Accordingly, it is necessary to execute a process of extracting image data with respect to all regions that appear to be objects, and to execute a recognition process for categorizing the extracted image data into people, vehicles, etc.

Then, as a result of recognition, it is determined what state the people or vehicles are in, and if a collision appears likely, decisions are made such as whether or not to execute such control as operating the brakes, avoiding a collision through a steering operation, etc., or whether a warning should be issued although the likelihood of a collision is low. There are infinite scenes that call for such decisions. As such, all such scenes were to be accommodated, the processing loads of the extraction process, recognition process, and determination process would become enormous for the image processing device.

As a method of mitigating the processing load of an image processing device, there is a method where scenes that require determination are restricted. One example is a method that restricts itself to scenes where an object is present in proximity to the host vehicle, and recognition and determination are executed only for the object closest to the host vehicle.

On the other hand, there are also methods that handle processing loads using a plurality of CPUs. Many multi-processor image processing devices divide the screen and allocate processors to the respective divided regions to even out the processing loads. In addition, many multi-core image processing devices realize data parallel processing, such as a filtering process, in which the same process is executed in parallel with respect to given pixels or regions (see, for example, Patent Documents 1 and 2).
Patent Document 1: JP Patent Application Publication (Kokai) No. 2005-85164 A
Patent Document 2: JP Patent Application Publication (Kokai) No. 6-215138 A (1994)

### DISCLOSURE OF THE INVENTION

### Problems to be Solved by the Invention

However, with a method that restricts the scenes for which a determination is required, there is a risk that dangerous situations might be tolerated. By way of example, with a method in which scenes are restricted to those in which objects are present in proximity to the host vehicle, and in which recognition and determination are executed only for the object closest to the host vehicle, in a scene where the host vehicle is traveling a road that has no sidewalk, a person is present in proximity, and there is a vehicle that is traveling in the opposite direction at an extremely high speed, recognition and determination would be performed only for the person who is the object closest to the host vehicle. However, in such a scene, it would be preferable to give priority to and recognize the vehicle traveling in the opposite direction at an extremely high speed.

Thus, since there are various types of objects to be sensed, e.g., people, vehicles, etc., and there are an infinite number of scenes in which these are combined, there was a problem in that when processing is performed, for example, only for the object closest to the host vehicle, and so forth, scenes that should be avoided in the real world could not be covered comprehensively.

In addition, in the case of a multi-processor system in which CPUs or cores are allocated to the respective divided regions of the screen, depending on the circumstances, regions with a low processing load occur, in which case the processing capabilities of the processors allocated to those regions would not be utilized effectively, and thus be wasted. Further, in the case of data parallel processing where the same process is executed in parallel with respect to given pixels or regions, efficiency is poor, and processing cannot be sped up.

The present invention is made in view of the points mentioned above, and an object thereof is to provide a vehicle-mounted image processing device that is able to make a plurality of processing units appropriately perform a process that suits a scene in which various people, vehicles, etc., are combined

### Means for Solving the Problems

A vehicle-mounted image processing device of the present invention that solves the above-mentioned problems is characterized in that, based on processing results that have been image processed by a plurality of processing units, tag information indicating the type and priority of the image processing to be executed next by each processing unit is generated, and whether or not to make each processing unit perform image processing is determined using the tag information generated during previous image processing.

### Effects of the Invention

An image processing device of the present invention generates, based on processing results that have been image processed by a plurality of processing units, tag information indicating the type and priority of image processing to be executed next by each processing unit, and determines, using the tag information generated during previous image processing, whether or not to make each processing unit perform image processing. Accordingly, it is possible to make a plurality of processing units appropriately perform processing in order of descending priority. Thus, scenes to be avoided in the real world may be covered comprehensively without any omission, and safety while the vehicle is traveling may be improved dramatically. The present specification incorporates the contents of the specification and/or drawings of JP Patent Application No. 2010-027747 from which the present application claims priority.

### BRIEF DESCRIPTION OF THE DRAWINGS

Fig. 1 is a diagram illustrating the configuration of an image processing device of the present embodiments.
Fig. 2 is a functional block diagram of an image processing device.
Fig. 3 is a flowchart illustrating the contents of a process of a processing unit and a controller.
Fig. 4 is a diagram showing an example of a packet outputted from a processing unit.
Fig. 5 is a diagram showing an example of a table searched at a controller.
Fig. 6 is a diagram schematically showing an image captured with a vehicle-mounted camera.
Fig. 7 is a flowchart illustrating a method of extracting image data by pixel.
Fig. 8 is a flowchart illustrating a method of extracting image data by line.
Fig. 9 is a flowchart illustrating a method of extracting image data by stripe.
Fig. 10 is a flowchart illustrating a method of extracting image data by block.
Fig. 11 is a diagram illustrating a method of managing process types and programs.
Fig. 12 is a diagram illustrating the configuration of a table managed by a controller.
Fig. 13 is a diagram illustrating the configuration of a table that manages the types and priorities of processes to be performed next with respect to the result of image processing.
Fig. 14 shows diagrams indicating examples of setting priorities.
Fig. 15 shows diagrams indicating examples of a processing region setting method.
Fig. 16 shows diagrams indicating examples of a processing region setting method.
Fig. 17 shows diagrams indicating examples of a processing region and priority setting method.
Fig. 18 is a diagram showing an example of the configuration of a processing unit.
Fig. 19 is a flowchart illustrating a method of processing according to priority.
Fig. 20 is a diagram showing an example where priority is determined by a processing unit.
Fig. 21 is a diagram showing an example where an urgency level is determined by a processing unit.
Fig. 22 is a diagram showing an example of a packet.
Fig. 23 is a diagram showing an example of a packet.
Fig. 24 is a flowchart illustrating a process of pre-fetching a program based on image ID.
Fig. 25 is a flowchart showing an example of a power consumption reduction method.

### List of Reference Numerals

10 Line buffer
20 Region extraction means
30 Image buffer
40 Processing unit
50 Determination means
60 Storage device
62 Current priority
70 Controller (tag information generation means)
80 Command buffer
90 Program
100 Communication channel
110 Packet
112 Processing result
114 Region information
130 Status management table
140 Program management table
150 Priority management table

### BEST MODES FOR CARRYING OUT THE INVENTION

Next, embodiments of the present invention are described using the drawings.

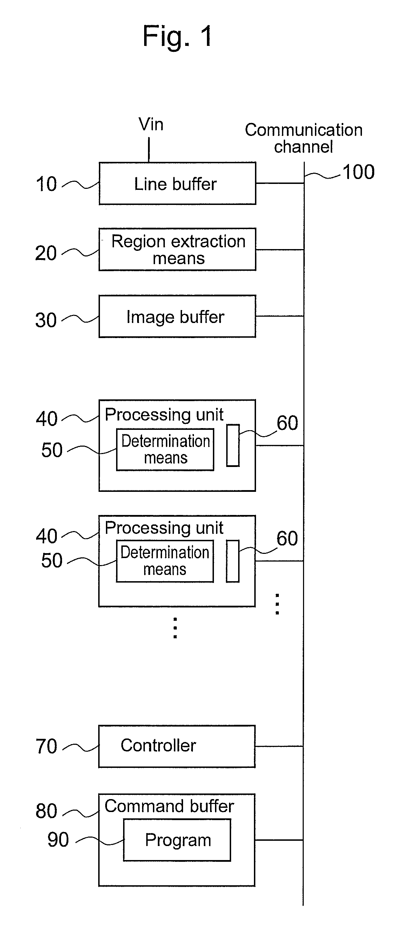

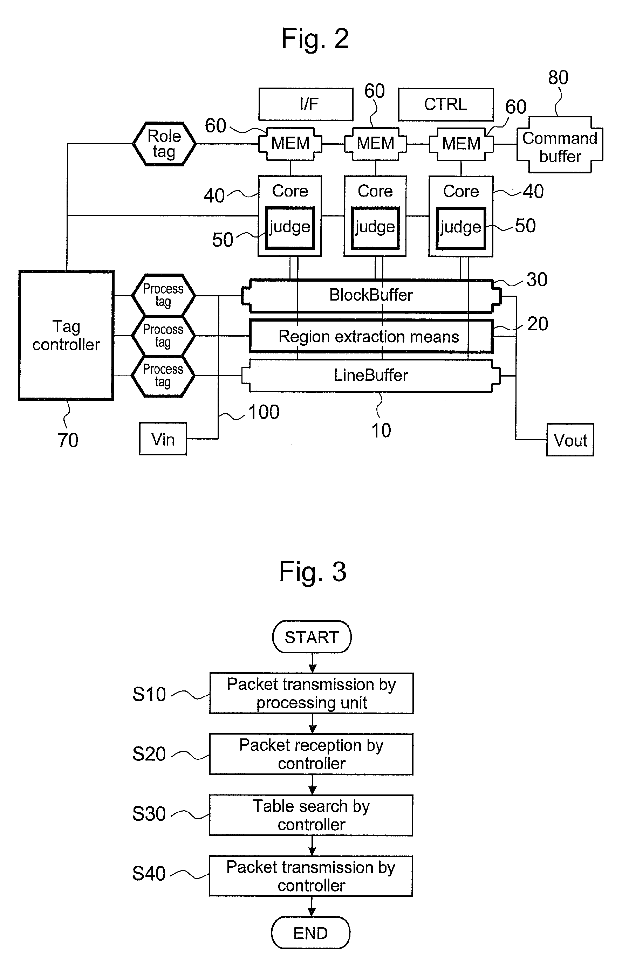

Fig. 1 is a diagram illustrating the configuration of an image processing device with respect to the present embodiments. Fig. 2 is a functional block diagram of an image processing device.

As shown in Fig. 1 and Fig. 2, an image processing device 1 comprises a line buffer 10, a region extraction means 20, an image buffer 30, a plurality of processing units 40, a controller 70, and a command buffer 80, which are connected with a communication channel 100 over which data may be transmitted/received, broadcasted, and shared. In multi-core systems, this communication channel 100 is often realized by a ring bus or a crossbar. However, the present invention is by no means limited to such bus systems.

The line buffer 10 is provided in this example because a typical image sensor used as a vehicle-mounted camera is structured to output image data line by line. A video input (Vin) through which signals from the vehicle-mounted camera are inputted is connected to the line buffer 10. By scanning line by line in the perpendicular direction, the line buffer 10 is able to generate one screen's worth of image data. This perpendicular scanning time is referred to as the frame period

Within the frame period for generating one screen's worth of image data, the region extraction means 20 divides the image data into desired processing regions at least in units of pixels, lines, stripes, or blocks, and extracts the image data of those processing regions. In synchrony with a perpendicular synchronization signal of the vehicle-mounted camera, etc., the region extraction means 20 reads one line's worth of image data from the line buffer 10 and repeats a process of acquiring the necessary pixel data, thereby extracting the image data of the processing regions.

The image buffer 30 stores the image data extracted at the region extraction means 20. The image buffer 30 is capable of storing a plurality of image data so as to be able to accommodate cases where there are more than one processing regions.

The plurality of processing units 40 each comprise a processor, such as a CPU, a core, etc. Each processing unit 40 performs image processing based on image data extracted by the region extraction means 20. Each processing unit 40 comprises a determination means 50, which determines whether or not to execute image processing, and a storage device 60.

Using the tag information generated by the controller 70 during previous image processing, the determination means 50 determines whether or not to make each processing unit 40 perform image processing. The storage device 60 is used for storing a program 90 and image data. However, the present invention is by no means limited to this configuration.

The controller 70 comprises a means for managing the relationship among processing result information of each processing unit 40, image data of processing regions, types of processes, and information indicating process priority. Based on the processing results of image processing outputted by the processing units 40, the controller 70 (tag information generation means) generates tag information indicating the type and priority of the image processing to be executed next by each processing unit 40.

The command buffer 80 manages the types of processes to be executed at the processing units 40, and the programs 90 corresponding to those process types. It is able to transmit the programs 90 to the processing units 40 based on the tag information generated by the controller 70 during previous image processing.

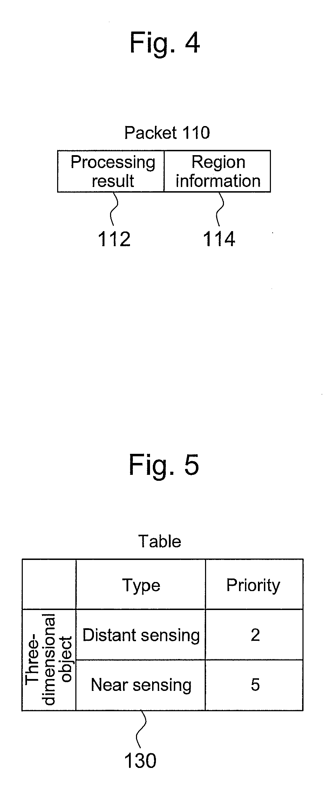

Fig. 3 is a flowchart illustrating the contents of a process of a processing unit and a controller. Fig. 4 is a diagram showing an example of a packet outputted from a processing unit. Fig. 5 is a diagram showing an example of a table searched at a controller.

The processing unit 40 executes image processing, generates a processing result 112 thereof and region information 114 of a processing region corresponding to the processing result, and transmits them to the controller 70 as a packet 110 (S10).

Upon acquiring the packet 110, the controller 70 searches a table 130 (Fig. 5) using the processing result 112 and the region information 114 contained in that packet 110 (S30), generates a packet by extracting the type of the corresponding process and the priority of that process, and transmits it to the processing unit 40.

By way of example, in a case where the processing unit 40 executes, as image processing, a three-dimensional object sensing process with respect to the entire screen and is unable to sense any three-dimensional objects, the processing unit 40 puts "three-dimensional object not sensed" information and region information" indicating the entire screen as processing results together into a packet and transmits it to the controller 70.

The controller 70 receives this packet via the communication channel 100. The controller 70 manages the table 130, which defines the type of process to be executed next with respect to the processing results and the priority of that process, and searches that table 130. The table 130 is comparable to a state transition table.

In the present example, as types of processes for "three-dimensional object not sensed," there are stored "long-range sensing process" and "short-range sensing process," where the priority of "long-range sensing process" is set high and the priority of "short-range sensing process" is set low. In accordance with this table 130, the controller 70 generates two types of information, namely, information that causes the long-range sensing process, which has high priority, to be executed, and information that causes the short-range sensing process, which has low priority, to be executed. Each of the types of information above is put together into a packet and transmitted.

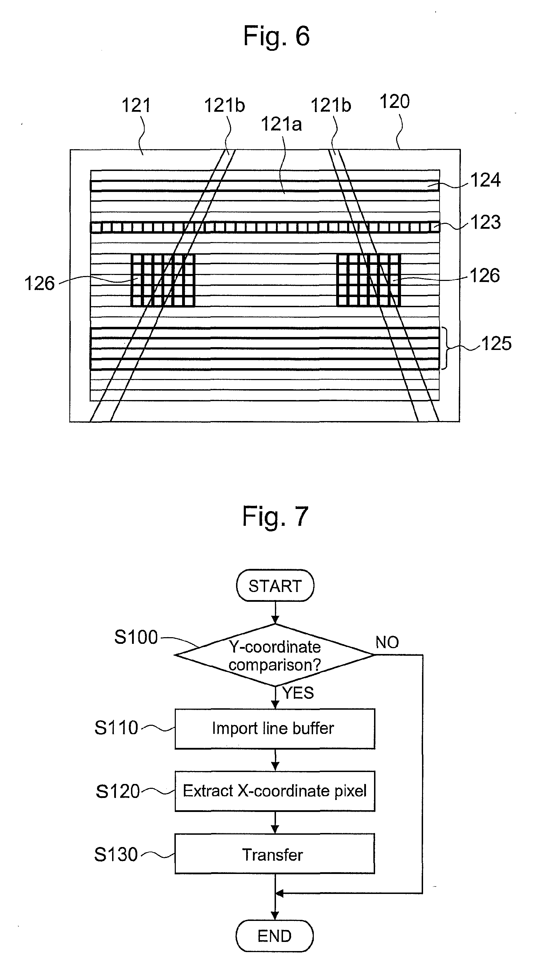

Fig. 6 is a diagram schematically showing an image captured by a vehicle-mounted camera. An image 121 captures a scene ahead of the vehicle from the vehicle-mounted camera, where a road surface 121a ahead of the vehicle and a pair of white lines 121b painted on the road surface along the left and right of the vehicle are shown within a frame 120. As shown in Fig. 6, pixels 123 are region information for given points within the image, and line 124 is a set of pixel data in the horizontal direction. Further, stripe 125 is a set of consecutive lines 124. Blocks 126 are region information for given rectangular regions within the image.

Fig. 7 to Fig. 9 are charts illustrating methods of extracting image data of a processing region from an image by a region extraction means. Fig. 7 is a flowchart illustrating a method of extracting image data by pixel. In this case, image data of the processing region specified by region information is extracted from one line's worth of data. It is assumed that, in the case of pixels, region information is indicated by "X-coordinate, Y-coordinate" with respect to the screen.

The region extraction means 20 compares the Y-coordinate with the order of the synchronization signal of the line buffer 10 (S100), and, if they are the same, imports the image data of the line buffer 10 (S 110). It then extracts the image data of the dot that coincides with the X-coordinate (S120), and transfers the extracted image data to the image buffer 30 along with region information (S 130).

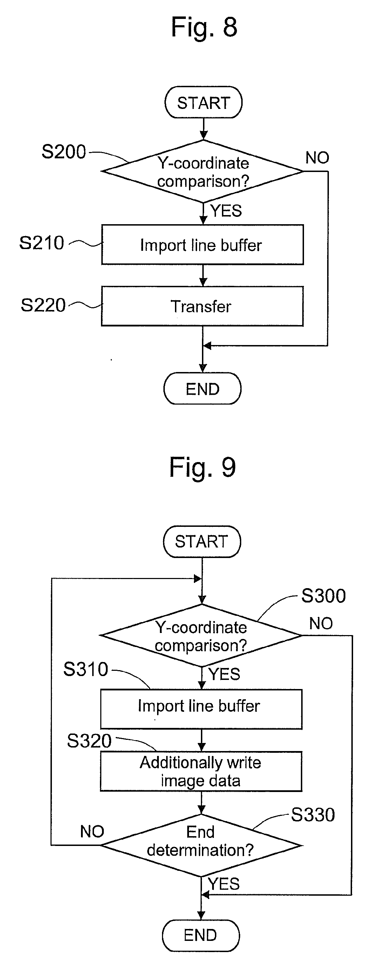

Fig. 8 is a flowchart illustrating a method of extracting image data by line. In this case, image data of the processing region specified by region information is extracted from one line's worth of data. In the case of lines, the region information is indicated by the "Y-coordinate" alone.

The region extraction means 20 compares the Y-coordinate with the order of the synchronization signal of the line buffer 10 (S200). If they are the same, it copies the image data of the line buffer 10 as is (S210). Further, it transfers the copied image data to the image buffer 30 along with region information (S220).

Fig. 9 is a flowchart illustrating a method of extracting image data by stripe. In the case of stripes, region information is indicated by a starting point and end point for the Y-coordinate. The region extraction means 20 compares the Y-coordinate with the order of the synchronization signal of the line buffer 10 (S300). If it falls between the starting point and end point for the Y-coordinate, the image data of the line buffer 10 is imported (S310). Further, the imported image data is additionally written (S320). Further, if the Y-coordinate is the end point (YES in S330), the additionally written image data and region information are transferred to the image buffer 30 together.

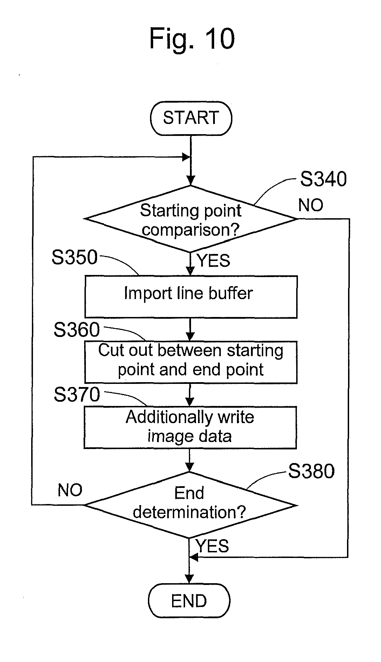

Fig. 10 is a flowchart illustrating a method of extracting image data by block.

In the case of blocks, region information is indicated by a combination of a starting point and end point for the X-coordinate and a starting point and end point for the Y-coordinate. The region extraction means 20 compares the Y-coordinate with the order of the synchronization signal of the line buffer 10, and determines if the order of the synchronization signal of the line buffer 10 exceeds the starting point for the Y-coordinate (S340). If it falls between the starting point and end point for the Y-coordinate, the image data of the line buffer 10 is imported (S350). Further, image data of from the starting point to the end point for the X-coordinate is cut out (S360) and additionally written (S370). If it is the same as the end point for the Y-coordinate (YES in S380), the copied and additionally written image data and the region information are transferred to the image buffer 30 together.

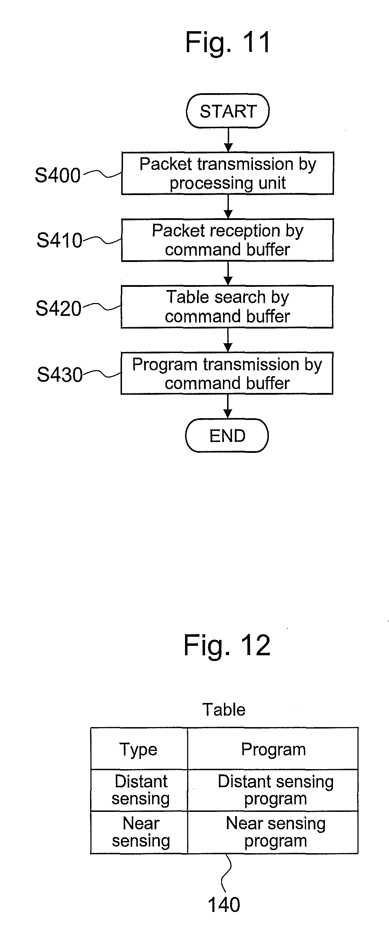

Fig. 11 is a flowchart illustrating a method of managing process types and programs. Fig. 12 is a diagram illustrating the configuration a table that a controller manages. The command buffer 80 manages process types and the programs 90 corresponding thereto together. In the present example, process types and the corresponding programs 90 with respect to the command buffer 80 are represented as a table 140 in a simple manner, but this is by no means limiting.

As shown in Fig. 11, after image processing is executed, the processing unit 40 transmits information on the process type thereof to the command buffer as a packet (S400). Upon receiving the packet from the processing unit 40 (S410), based on the process type information contained in that packet, the command buffer 80 searches the table 140 shown in Fig. 12 (S420), extracts the program 90 corresponding to the process type, and transmits it to the processing unit 40 (S430).

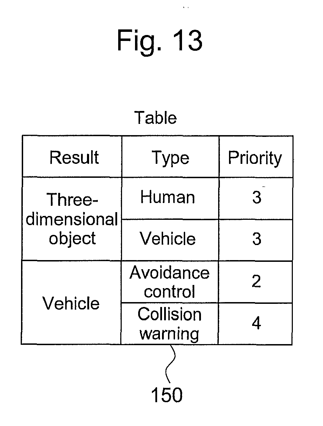

Fig. 13 is a diagram illustrating the configuration of a table for managing the types and priorities of processes to be performed next with respect to image processing results. Using a table 150 that is comparable to a state transition table, the controller 70 manages the relationship among processing result information, process types, and information indicating process priority.

The table 150 manages the types of processes to be executed next with respect to the image processing results, and the priorities of these processes. By way of example, for the processing result "three-dimensional object sensed," two types of processes, namely "human recognition process" and "vehicle recognition process," are defined for the processes to be executed next. "human recognition process" and "vehicle recognition process" have the same priority.

In addition, for the processing result "vehicle recognized," two types of processes, namely "avoidance control process" and "collision warning process," are defined for the processes to be executed next. However, between avoidance and warning, the former has greater importance. Accordingly, "avoidance control process" has higher priority than "collision warning process." In the present example, priority is so defined as to be greater the smaller the numerical value. Although they are represented as the table 150 comparable to a state transition table in the present example, this is by no means limiting.

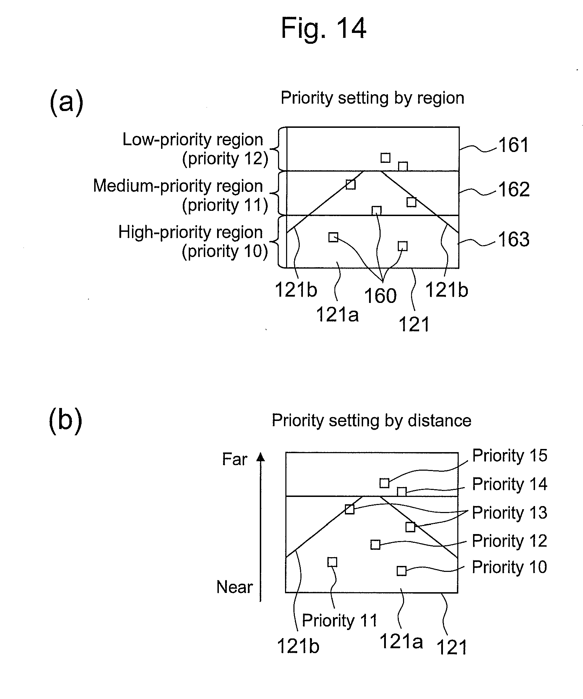

Fig. 14 shows diagrams representing methods of setting priority. By way of example, if, as a result of image processing, it is possible to measure the distance to recognition objects 160, by assigning priorities in accordance with the regions of the image and the distance to the recognition objects 160, it becomes possible to provide a function comparable to selecting the nearest object as is done in conventional systems.

In the present example, as shown in Fig. 14(a), three regions are defined, namely, a distant low-priority region 161, a medium-priority region 162 slightly ahead, and a nearby high-priority region 163. In addition, as shown in Fig. 14(b), it is also possible to individually assign priority to the recognition objects. Fig. 14(b) shows an example where priorities 10 to 15 are assigned to each recognition obj ect in accordance with the distance from the host vehicle. However, the difference in relation to conventional systems is that instead of processing only the nearest object, it becomes possible to continue processing in accordance with priority with respect to a plurality of the recognition objects 160 besides that which is closest, and it becomes possible to monitor dangerous objects without missing any.

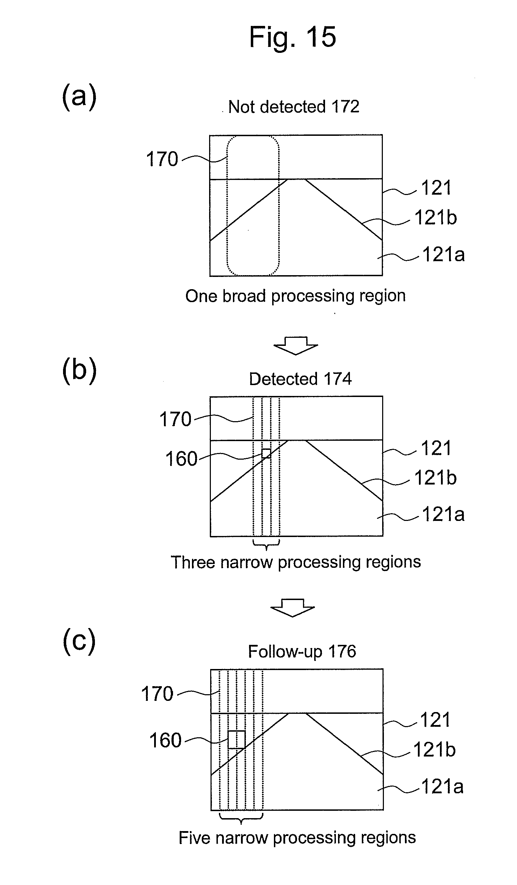

Fig. 15 shows diagrams representing an example of a processing region setting method. By way of example, if, as a result of image processing, an object is detected in the distance and this object approaches the host vehicle as time passes, the size of the object on the screen becomes greater, and the image data of the processing region also becomes greater. As the image data to be recognized becomes greater, the processing load on the processing unit 40 also increases.

In this case, by dividing the processing region and autonomously distributing processing among the plurality of processing units 40 based on the total number of the processing units 40 and on priority, it is possible to prevent the processing load from becoming concentrated at just one processing unit 40.

By way of example, as shown in Fig. 15(a), for case 172 where no object is detected, it is necessary to monitor a broad region, and a processing region 170 is broadened accordingly. Then, as shown in Fig. 15(b), for case 174 where a recognition object 160 (object) is sensed, since it is unknown whether the recognition object 160 will move away from or approach the host vehicle, the monitored range is divided so that both may be accommodated, and three narrow processing regions 170 are set in proximity to the recognition object 160. Accordingly, by assigning the processing units 40 to the respective three processing regions 170, more precise image processing may be performed.

Then, as the recognition object 160 approaches the host vehicle, it occupies a larger region in the image 121 as shown in Fig. 15(c), and five narrow processing regions 170 are accordingly set in proximity to the recognition object 160. Therefore, by respectively assigning the processing units 40 to the five processing regions 170, more precise image processing is performed. By thus setting processing regions corresponding to monitored regions in accordance with the behavior of an object and assigning an appropriate number of processing units 40 where they are needed, high-precision detection may be performed, and it becomes possible to accommodate various situations for various objects.

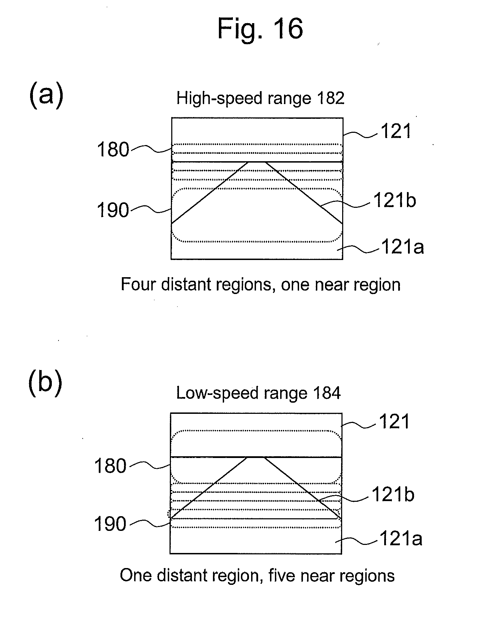

Fig. 16 shows examples of a processing region setting method. By way of example, if the host vehicle's speed information is available, the size of the processing region may be set in accordance with the speed range. By way of example, if the vehicle speed of the host vehicle is high, recognition of distant objects must be enabled. In such high-speed ranges, it is necessary to improve precision for distant object sensing. Accordingly, in a high-speed range 182, as shown in Fig. 16(a), the distant portion is divided into four processing regions 180, and processing is distributed among the plurality of processing units 40 with priority, thereby improving precision for distant object sensing.

On the other hand, if the vehicle speed of the host vehicle is low, recognition of objects nearby must be enabled. In such low-speed ranges, it is necessary to improve precision for near object sensing. Accordingly, in a low-speed range 184, as shown in Fig. 16(b), the vicinity of the host vehicle is divided into five processing regions 190, and processing is distributed among the plurality of processing units 40 with priority, thereby improving precision for near object sensing.

By thus setting processing regions in accordance with the speed range corresponding to the behavior of the host vehicle, it is possible to accommodate various situations of objects. In the present example, speed was handled as information representing the behavior of the host vehicle. However, by setting processing regions in a flexible manner in accordance with, by way of example, the steering angle or steering speed of the steering wheel, it becomes possible to accommodate various situations at curves and intersections.

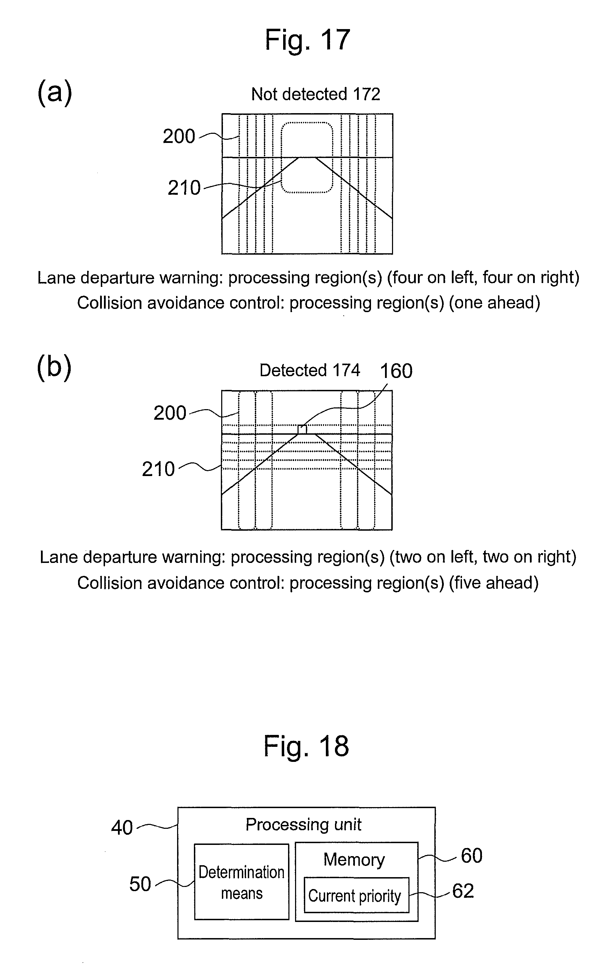

Fig. 17 shows diagrams representing examples of a processing region and priority setting method. Here, priority switching takes place depending on the circumstances of object sensing. By way of example, if, as a result of image processing, no object ahead is detected as in case 172 in Fig. 17(a), the risk level in terms of the safety function is likely low. Accordingly, the priority of the "lane departure warning process" is raised, processing regions 200 for monitoring the left and the right are divided into four each on the left and the right in order to enhance recognition precision for the left and the right, and processing is distributed among the plurality of processing units 40 with priority. Further, the priority of the "collision avoidance control process," which has high urgency, is lowered, and a processing region 210 for monitoring the region ahead is assigned one processing unit 40 just in case and the processing thereof is delegated thereto.

On the other hand, if, as a result of image processing, an object ahead is sensed as a recognition object 160 as shown in Fig. 17(b), since the risk level in terms of the safety function is likely going to be high, the priority of the "collision avoidance control process," which has high urgency, is raised, the processing regions 210 for monitoring the region ahead are divided in order to raise recognition precision for the region ahead, and processing is distributed among the plurality of processing units 40 with priority. Further, the priority of the "lane departure warning process" is lowered, the left and right processing regions 200 are divided into two each, and two processing units 40 are assigned respectively just in case, and the processing thereof is delegated thereto. The priorities of the respective processes of warning and control are thus altered depending on the circumstances, and autonomous distribution of processing is realized.

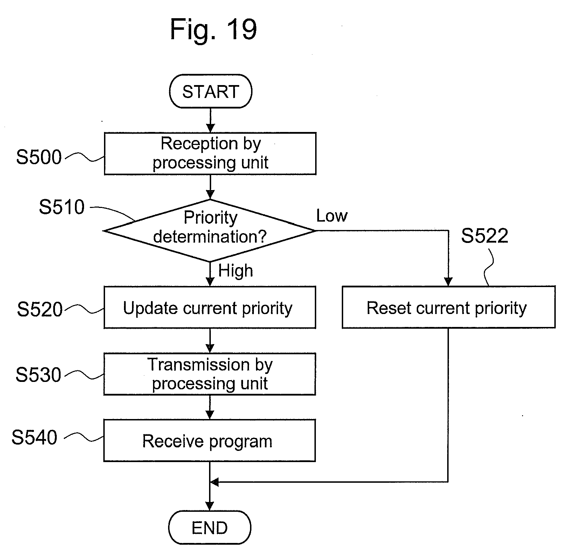

Fig. 18 is a diagram showing an example of the configuration of a processing unit. Fig. 19 is a flowchart illustrating a priority-based processing method by the processing unit in Fig. 18. In the present example, as shown in Fig. 18, when a process is executed, the processing unit 40 holds in memory 60 either the priority of the process or a current priority 62 that has been reset.

The processing unit 40 receives from the controller 70 a packet containing tag information generated during previous image processing, and acquires information on the type and priority of the process (S500). Then, the determination means 50 makes a determination by comparing the current priority and the received priority (S510). In the present example, the determination means 50 simply determines whether the received priority is higher or lower than the current priority, and if higher, updates the current priority with that priority (S520).

The processing unit 40 transmits the process type to the command buffer 80 (S530), and receives from the command buffer 80 the program 90 corresponding to the process type (S540). Further, if the received priority is low, the current priority is reset (S522).

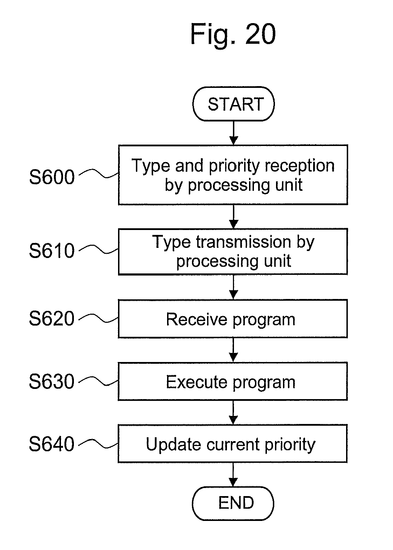

Fig. 20 is a diagram showing an example of priority determination by a processing unit. Here, based on the processing result of the program 90, the processing unit 40 itself updates the current priority. The processing unit 40 receives from the controller 70 a packet containing tag information generated during previous image processing, and acquires information on the type and priority of the process (S600). The processing unit 40 transmits the process type to the command buffer 80 (S610), receives from the command buffer 80 the program 90 corresponding to the process type (S620), and executes that program 90 (S630).

The processing unit 40 generates a priority through the program 90 and updates the current priority (S640). If it is possible to uniquely determine priority from the design stage, by clearly generating a priority in a program as in the present example, reliable priority control may be effected.

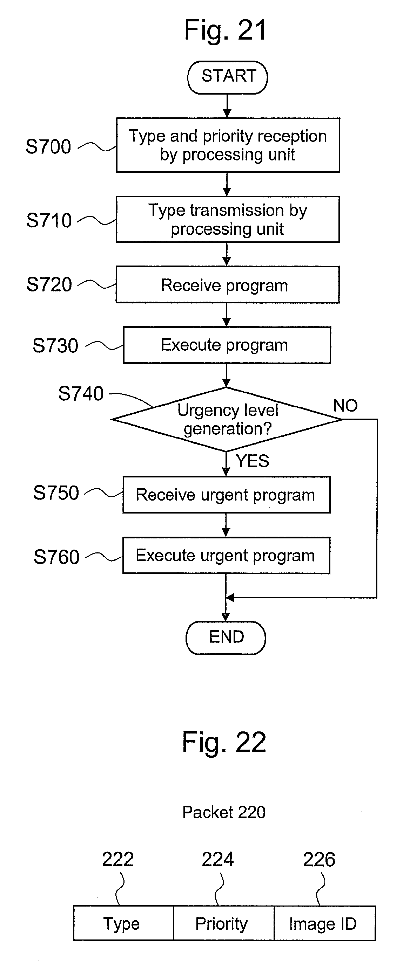

Fig. 21 is a diagram showing an example of urgency level determination by a processing unit. Here, process activation that requires an urgent and real-time response is realized at the processing unit 40. In the table in Fig. 12 discussed above, only states such as "three-dimensional object sensed" were defined for processing results. However, the present example is an example in which such processing result states as well as urgency levels corresponding to the processing results are generated.

The processing unit 40 receives from the controller 70 a packet containing tag information generated during previous image processing, and acquires information on the type and priority of the process from the tag information (S700). The processing unit 40 transmits the process type to the command buffer 80 (S710), and acquires from the command buffer 80 the program 90 corresponding to the process type (S720). The processing unit 40 executes the program 90 (S730), and checks whether or not an urgency level has been generated (S740).

If an urgency level has been generated, the urgency level is transmitted to the command bluffer, and the program 90 corresponding to the urgency level is acquired from the buffer 80 (S750). The processing unit 40 executes the acquired urgent program 90 (S760). By employing such a flow and promptly executing a process of high urgency without going through the controller 70, real-time properties maybe improved.

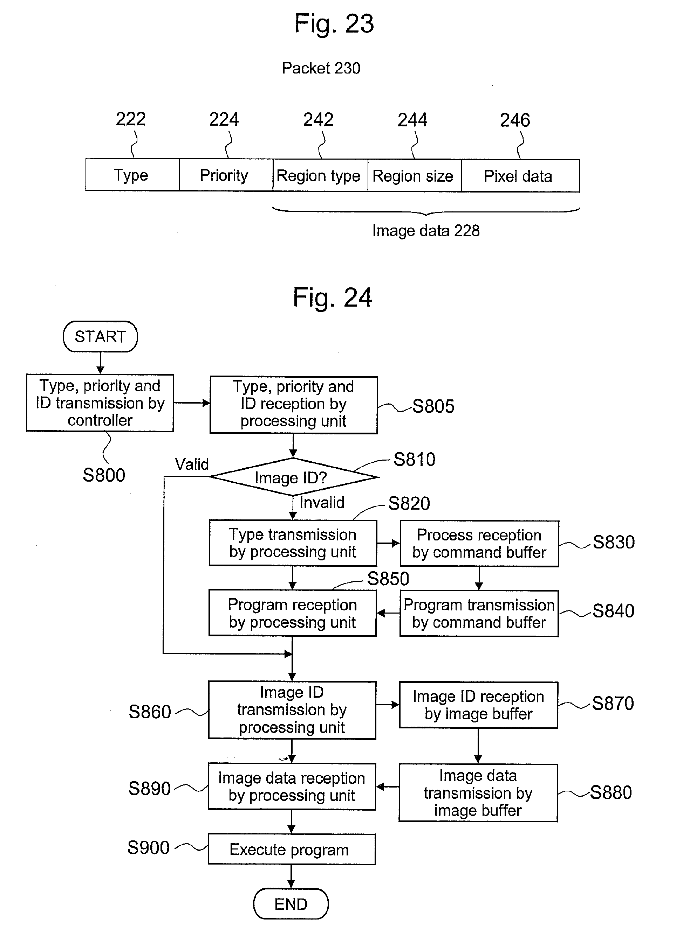

Fig. 22 and Fig. 23 are diagrams showing packet examples.

As shown in Fig. 22, a packet 220 comprises a process's type 222 and priority 224, and an image ID 226. The image ID 226 comprises the region information 114 of the processing regions. By specifying the image ID 226, the processing unit 40 acquires from the image buffer 30 the image data corresponding to the processing regions.

As shown in Fig. 23, a packet 230 comprises a process's type 222 and priority 224, and image data 228. The image data 228 comprises, as one set, a region type 242 for identifying the shape of a processing region, a region size 244 for identifying the size of the processing region, and a pixel data group 246. The region type 242 is an identifier representing region information corresponding to the pixels 123, the lines 124, the stripes 125, and the blocks 126 shown in Fig. 6. In addition, the region size is invalid in the case of the pixels 123, is a Y-coordinate position in the case of the lines 124, is the Y-coordinate width in the case of stripes, and the XY-coordinates of corners and the respective widths in the vertical and horizontal directions in the case of the blocks 126. The pixel data comprises the respective values of the pixels that lie in the above-mentioned region. By way of example, for a black and white image, the pixel data assumes an 8-bit value, that is, 0 to 255, whereas for a color image, each of three RGB data assumes a value of 0 to 255. It is noted that the present invention is by no means limited to black and white, color, or 8 bits.

Fig. 24 is a flowchart illustrating a program pre-fetch process based on image ID. With respect to the configuration of the example in Fig. 1, the controller 70 is able to determine the process type, etc., before the importing of the image data of the line buffer 10 begins. Accordingly, before the image data of the processing region corresponding to the region information is imported entirely, the program is transmitted from the command buffer 80 to the processing unit 40, thereby enabling pre-fetch.

Before receiving the image data 228, each processing unit 40 receives a program from the command buffer 80, pre-fetches the program, and subsequently receives the image data, thereby beginning image processing.

By way of example, at the time at which the importing of image data from the line buffer 10 is begun, the program 90 corresponding to the process type may be downloaded from the command buffer 80, and the processing unit 40 is able to begin execution earlier as compared to downloading after the importing of image data has been completed.

Taking the packet 220 shown in Fig. 22 discussed above as an implementation example, the controller 70, as shown in Fig. 24, transmits to the processing unit 40 the type and priority of a process and an image ID through the packet 220 (S800). Since, at this point, the entire screen is not captured yet, an invalid value is set for the image ID.

The processing unit 40 receives from the controller 70 the packet containing tag information generated during previous image processing, and acquires, from the tag information, information on the type and priority of the process and the image ID (S805). It is then determined whether or not the image ID is valid (S810), and if the image ID is invalid, the process type is transmitted to the command buffer 80 (S820).

Upon receiving the process type (S830), the command buffer 80 searches for the program 90 corresponding to that process type, and transmits the program 90 to the processing unit 40 (S840). The processing unit 40 receives the program 90 (S850), and if the image ID is valid, transmits the image ID to the image buffer 30 (S860).

Upon receiving the image ID (S870), the image buffer 30 transmits to the processing unit 40 the image data corresponding to the image ID (S880). Upon receiving the image data (S890), the processing unit 40 executes the program 90 to process the image data (S900). It is noted that the region extraction means 20 transmits the type and priority of the process and a valid image ID upon completing the generation of image data for the image region information.

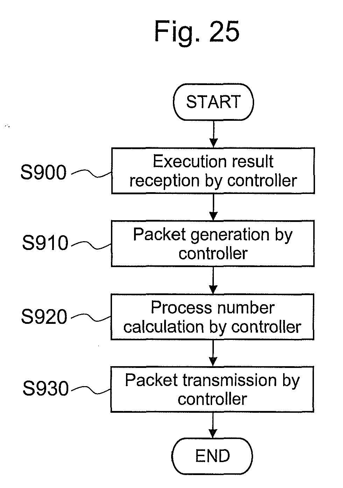

Fig. 25 is a flowchart showing an example of a power consumption reduction method. In this example, when there are fewer processes to be executed than the total number of processing units 40, the non-operational processing units 40 are placed in sleep mode, thereby achieving a reduction in power consumption.

In the present example, the controller 70 manages the total number of processing units 40 and the number of processing units 40 that are executing a process. The controller 70 receives a processing result from the processing units 40 (S900). Then, as in the example in Fig. 22 or Fig. 23 discussed above, a packet corresponding to the processing result is generated (S910).

From the total number of processing units 40, the number of processing units 40 executing a process, and the number of processing units 40 that are idle, the controller 70 calculates the number of processing units 40 that are in a process waiting state (S920), and transmits packets in a quantity corresponding to the number of processing units 40 that are in a process waiting state (S930). These packets specify, by way of example, a sleep program for the process type. Upon receiving a sleep program packet from the controller 70, the processing unit 40 changes the operation mode of the processing unit 40 from the normal mode to a sleep mode that consumes less power. Accordingly, the power consumed by the processing units 40 in a process waiting state may be reduced.

According to the image processing device discussed above, tag information representing the type and priority of the process to be executed next by each processing unit 40 is generated based on the processing result of each processing unit 40, and whether or not each processing unit 40 is to perform image processing is determined using the tag information generated during previous image processing. Consequently, it is possible to make a plurality of processing units appropriately perform processes in order of descending priority. Accordingly, scenes to be avoided in the real world may be covered comprehensively, enabling a dramatic improvement in safety while the vehicle is traveling.

Further, with respect to a processing region for which image processing needs to be performed with greater precision, the processing region may be divided and a processing unit may be assigned to each. Thus, processing may be distributed among a plurality of processing units 40 with priority, and the processing load may be prevented from becoming concentrated at a single processing unit 40. Thus, image processing may be sped up, warnings and automatic brake control, etc., based on image processing results may be performed promptly, and safety while the vehicle is traveling may be improved dramatically.

## Claims

1. A vehicle-mounted image processing device that performs image processing on an image intermittently captured by a vehicle-mounted camera, the vehicle-mounted image processing device comprising:
region extraction means that extracts, from the image, image data of a processing region on which the image processing is to be performed;
a plurality of processing units that perform the image processing based on the image data extracted by the region extraction means;
tag information generation means that generates, based on a processing result of the image processing by each of the processing units, tag information representing a type and priority of the image processing to be executed next by each of the processing units; and
determination means that determines, using tag information generated by the tag information generation means during previous image processing, whether or not to have image processing performed at each of the processing units.

2. The vehicle-mounted image processing device according to claim 1, wherein the region extraction means determines the processing region using the tag information generated by the tag information generation means during previous image processing.

3. The vehicle-mounted image processing device according to claim 1, wherein the region extraction means extracts the image data from the image in units of at least one of pixels, lines, stripes, and blocks.

4. The vehicle-mounted image processing device according to claim 1, further comprising a command buffer that stores a program corresponding to a type of the image processing and that transmits the program to each of the processing units based on the tag information generated by the tag information generation means during previous image processing, wherein
each of the processing units performs the image processing based on the program received from the command buffer.

5. The vehicle-mounted image processing device according to claim 4, wherein each of the processing units receives the program from the command buffer before receiving the image data, pre-fetches the program, and subsequently receives the image data, thereby starting the image processing.

6. The vehicle-mounted image processing device according to claim 1, wherein the tag information comprises an urgency level of the image processing.

7. The vehicle-mounted image processing device according to claim 1, wherein the tag information generation means puts the tag information together as a packet and transmits it to the processing units.

8. The vehicle-mounted image processing device according to claim 1, wherein each of the processing units determines the necessity of processing based on the tag information generated by the tag information generation means during previous image processing, and, if it is determined that there is no necessity, changes an operation mode from a normal mode to a sleep mode that consumes less power to reduce power consumption by the processing units.

9. The vehicle-mounted image processing device according to claim 2, wherein the region extraction means extracts the image data from the image in units of at least one of pixels, lines, stripes, and blocks.

10. The vehicle-mounted image processing device according to claim 2, further comprising a command buffer that stores a program corresponding to a type of the image processing and that transmits the program to each of the processing units based on the tag information generated by the tag information generation means during previous image processing, wherein
each of the processing units performs the image processing based on the program received from the command buffer.

11. The vehicle-mounted image processing device according to claim 2, wherein the tag information comprises an urgency level of the image processing.

12. The vehicle-mounted image processing device according to claim 2, wherein each of the processing units determines the necessity of processing based on the tag information generated by the tag information generation means during previous image processing, and, if it is determined that there is no necessity, changes an operation mode from a normal mode to a sleep mode that consumes less power to reduce power consumption by the processing units.
